# EUROPEAN PATENT APPLICATION

(11) **EP 4 524 561 A1**
(43) Date of publication of application: **19.03.2025**
(21) Application number: 22941766.2
(22) Date of filing: 28.12.2022
(51) Int. Cl.: G01N 30/88, G01N 27/626, G01N 27/68, G01N 30/64, G01N 30/68, G01N 30/78, G01N 30/86

(54) **GREENHOUSE GAS MEASURING METHOD AND MEASURING DEVICE**

(30) Priority: 12.05.2022 JP 2022078682
(71) Applicant: SHIMADZU CORPORATION, Kyoto-shi, Kyoto 604-8511 (JP)
(72) Inventor: SHIMBO, Emiko, Kyoto-shi, Kyoto 604-8511 (JP)
(74) Representative: Müller-Boré & Partner Patentanwälte PartG mbB
(86) International application number: PCT/JP2022/048549
(87) International publication number: WO 2023/218694

(57) **Abstract**

One mode of the present invention is a method for measuring three types of greenhouse gases including CO₂, CH₄, and N₂O contained in an atmosphere by using GC, the method including: a separation step of introducing the atmosphere which may contain the three types of greenhouse gases as components into a column 15 of the GC and separating various components in the atmosphere including the three types of greenhouse gases in a time direction; a first detection step of detecting each of CO₂ and N₂O in a gas after having been subjected to a component separation in the separation step using a BID 16; a second detection step of detecting CH₄ in the gas after having been subjected to the component separation in the separation step using a FID 17; and a quantitative determination step of preparing chromatograms respectively based on detection signals obtained in the first detection step and based on detection signals obtained in the second detection step, and quantifying CO₂, CH₄, and N₂O respectively from peaks observed in the chromatograms. With the measuring method of this mode, CO₂, CH₄, and N₂O in the atmosphere can be simultaneously measured more easily and with high sensitivity.

## Description

### TECHNICAL FIELD

The present invention relates to a method and a device for measuring greenhouse gases in the atmosphere using a gas chromatograph (hereinafter, sometimes abbreviated as "GC").

### BACKGROUND ART

There is an increasing concern that recent rapid progress of global warming causes a rise in the sea level, frequent occurrence of abnormal weather, and the like, and will greatly affect natural ecosystems, living environments, agriculture, forestry, and fishery industries, and the like. The main cause of global warming is the increase of so-called greenhouse gases in the atmosphere emitted by human industrial activities. Carbon dioxide (CO₂) accounts for the largest amount of total greenhouse gas emissions, followed by methane (CH₄) and dinitrogen monoxide (N₂O). From these facts, as an effort to prevent global warming, it is very important to continuously monitor the concentration of such main greenhouse gases in the atmosphere.

As a method for measuring the concentrations of CO₂, CH₄, and N₂O in the atmosphere, a method using GC is known. In GC, various types of detectors are used according to the type, characteristics, and the like of a component to be measured. When CO₂, CH₄, and N₂O in the atmosphere are measured using GC, usually a thermal conductivity type detector (TCD) for CO₂, a flame ionization detector (FID) for CH₄, and an electron trapping type detector (ECD) for N₂O are respectively used as detectors. Patent Literature 1 describes a system which measures the concentrations of CO₂, CH₄, and N₂O in the atmosphere using these three types of detectors by one shot of sample.

### CITATION LIST

### PATENT LITERATURE

Patent Literature 1: JP 2006-275844 A
Patent Literature 2: JP 5136300 B2

### SUMMARY OF INVENTION

### TECHNICAL PROBLEM

In the conventional measurement system described in Patent Literature 1, in order to sufficiently separate the three components from each other, a plurality of thermostatic baths set at different temperatures and a column accommodated in each of the thermostatic baths are used, and the plurality of columns and respective detectors are switched by switching passages with a passage switching valve according to the lapse of time from the time of sample shot. In that case, the configuration of the device becomes considerably complicated and large, so that the device is expensive and lacks versatility. In addition, since the ECD uses a radioisotope substance, there is also a problem in that it is difficult to handle and the maintenance and management are troublesome.

The present invention has been made to solve such problems, and a main object of the present invention is to provide a method and a device capable of measuring CO₂, CH₄, and N₂O in the atmosphere, which are main greenhouse gases, more easily and with high sensitivity simultaneously (that is, by one sample shot).

### SOLUTION TO PROBLEM

One mode of a greenhouse gas measuring method according to the present invention made to solve the above problems is a method for measuring three types of greenhouse gases, carbon dioxide, methane, and dinitrogen monoxide, contained in an atmosphere by using a gas chromatograph, the method including:
a separation step of introducing the atmosphere which may contain the three types of greenhouse gases as components into a column of the gas chromatograph and separating various components in the atmosphere including the three types of greenhouse gases in a time direction;
a first detection step of detecting each of carbon dioxide and dinitrogen monoxide in a gas after having been subjected to a component separation in the separation step using a dielectric barrier discharge ionization detector;
a second detection step of detecting methane in the gas after having been subjected to the component separation in the separation step using a flame ionization detector; and
a quantitative determination step of preparing chromatograms respectively based on detection signals obtained in the first detection step and based on detection signals obtained in the second detection step, and quantifying carbon dioxide, dinitrogen monoxide, and methane respectively from peaks observed in the chromatograms.

Another mode of a greenhouse gas measuring device according to the present invention is a device configured to measure three types of greenhouse gases, carbon dioxide, methane, and dinitrogen monoxide, contained in an atmosphere, the measuring device including:
a column of a gas chromatograph configured to separate various components in the atmosphere which may contain the three types of greenhouse gases as components in a time direction;
a dielectric barrier discharge ionization detector configured to detect each of carbon dioxide and dinitrogen monoxide in a gas after having been subjected to a component separation in the column; and
a flame ionization detector configured to detect methane in the gas after having been subjected to a detection by the dielectric barrier discharge ionization detector; and
a quantitative determination processor configured to create chromatograms based on detection signals obtained by the dielectric barrier discharge ionization detector and the flame ionization detector, to respectively quantify carbon dioxide, dinitrogen monoxide, and methane from peaks observed in the chromatograms.

### ADVANTAGEOUS EFFECTS OF INVENTION

According to the above mode of the greenhouse gas measuring method and measuring device according to the present invention, it is possible to measure carbon dioxide, methane, and dinitrogen monoxide, which are main greenhouse gases in the atmosphere, with high sensitivity while using a device having a simple and inexpensive configuration without complicated passage switching or the like. Accordingly, the measurement of the greenhouse gases can be easily performed at low cost.

### BRIEF DESCRIPTION OF DRAWINGS

[Fig. 1] A schematic configuration diagram of one embodiment of a measuring device for carrying out a greenhouse gas measuring method according to the present invention.
[Fig. 2] A schematic configuration diagram of BID used for the greenhouse gas measuring device according to the present embodiment.
[Fig. 3] A configuration diagram of a main part of another embodiment of the measuring device for carrying out the greenhouse gas measuring method according to the present invention.
[Fig. 4] A configuration diagram of a main part of another embodiment of a measuring device for carrying out a greenhouse gas measuring method according to the present invention.
[Fig. 5] A diagram illustrating an actual measurement example of a chromatogram with respect to the atmosphere, the chromatogram being obtained by GC using BID as a detector.
[Fig. 6] A diagram illustrating an actual measurement example of a chromatogram with respect to the atmosphere, the chromatogram being obtained using the measuring device illustrated in Fig. 1.

### DESCRIPTION OF EMBODIMENTS

### [Measurement Principle]

In recent years, a dielectric barrier discharge ionization detector (hereinafter, sometimes abbreviated as "BID") described in Patent Literature 2 or the like has been put into practical use as a detector of GC. The BID is a detector of a type in which molecules of a target component in a gas are ionized using light energy emitted from low-frequency dielectric barrier discharge plasma, and the ions are collected by an electrode to extract a flowing ion electric current. In principle, the BID can detect all components other than helium (He) and neon (Ne), and is particularly useful for analysis of inorganic gases. However, on the contrary, this means that in a case where various components are included such as in the atmosphere, a plurality of components may be detected in an overlapping manner unless the target component and a foreign component other than the target are introduced into the BID in a state of being sufficiently separated from each other.

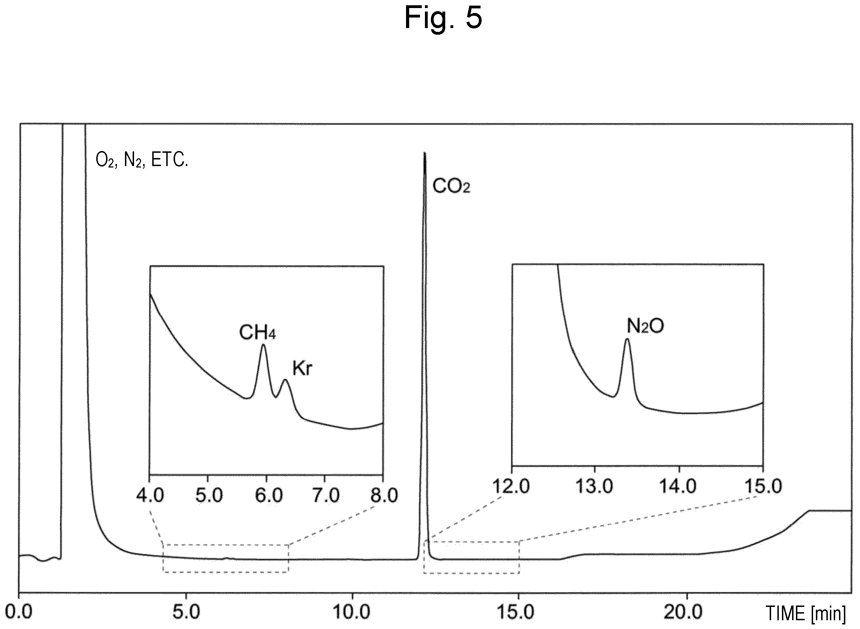

Fig. 5 is a diagram illustrating an actual measurement example of a chromatogram in a case of measuring the atmosphere by GC using the BID as a detector. The concentrations of CO₂, CH₄, and N₂O in the atmosphere are about 410 ppm, about 1.8 ppm, and about 0.32 ppm, respectively. As the column, a Micropacked ST column manufactured by Shinwa Chemical Industries Ltd. is used. As illustrated in Fig. 5, O₂ and N₂, which are main components in the atmosphere, are sufficiently separated from CO₂, CH₄, and N₂O, and low concentrations of CH₄ and N₂O and a relatively high concentration of CO₂ are all detected with sufficient intensity. However, krypton (Kr) present in the atmosphere is also detected, and the peak of Kr and the peak of CH₄ partially overlap. Therefore, it is difficult to quantify CH₄ from the chromatogram with high accuracy.

In order to solve this problem, the inventor of the present invention has conceived a method of detecting CO₂ and N₂O using the BID and detecting CH₄ using the FID. While the FID has high detection sensitivity to organic compounds (except some organic compounds), the FID has no sensitivity to Kr. Therefore, as illustrated in Fig. 5, it is possible to selectively detect only CH₄ even in a state where CH₄ and Kr are not sufficiently separated, and high quantitative accuracy can be achieved. In addition, since both the BID and the FID can use helium as a carrier gas, it is also advantageous that another gas does not need to be added in the middle of a passage as in a system described in Patent Literature 1.

In the GC using both the BID and the FID, when the detection of CO₂ and N₂O by the BID and the detection of CH₄ by the FID are performed by one sample shot, one of the following three procedures can be adopted.

(Method A) The BID and the FID are connected in series to an outlet of one column, and CH₄ present in a gas after CO₂ and N₂O are detected by the BID is detected by the FID.

(Method B) A gas having exited from the outlet of one column is branched into two, one is introduced into the BID, and the other is introduced into the FID, and CO₂ and N₂O are detected by the BID, and CH₄ is detected by the FID.

(Method C) Inlets of two columns are connected to a sample introduction unit, the BID is connected to an outlet of one column of the two columns, the FID is connected to an outlet of the other column, CO₂ and N₂O are detected by the BID, and CH₄ is detected by the FID.

Since the BID ionizes and detects component molecules in a gas, part of CH₄ contained in the gas introduced into the BID is ionized and excluded from the gas, but in practice, most of CH₄ remains in the gas discharged from the BID. That is, unlike the FID or the like that introduces a sample gas into hydrogen flame, in the BID, the introduced sample gas is discharged almost as it is except that some of the components in the sample gas is removed by ionization and diluted, and it can be said that the BID is a substantially non-destructive detector. In addition, the gas containing the target component is branched into two at the column outlet in the method B, and at the column inlet in the method C, whereas almost all of the various components sent into one column are introduced into the BID and the FID in the method A. Therefore, in the method A, detection can be performed with high sensitivity for all of CO₂, CH₄, and N₂O, and high quantitative accuracy can be achieved. In comparison with this, the method B and the method C are disadvantageous in sensitivity, but there is no influence of insufficient separation between CH₄ and Kr, and thus sufficiently high quantitative accuracy can be achieved.

### [Configuration of Measuring Device of One Embodiment]

As one embodiment of a measuring device for carrying out a greenhouse gas measuring method according to the present invention, a measuring device corresponding to the method A described above will be described with reference to the accompanying drawings.

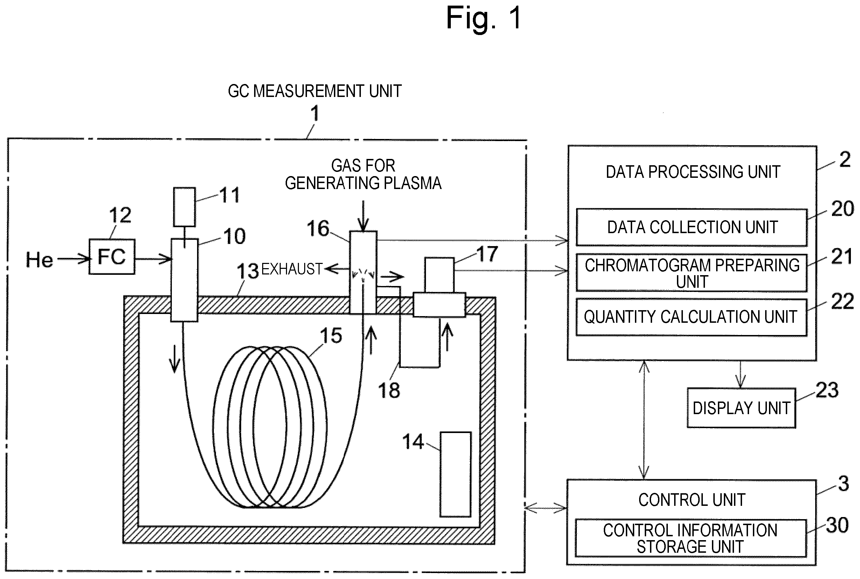

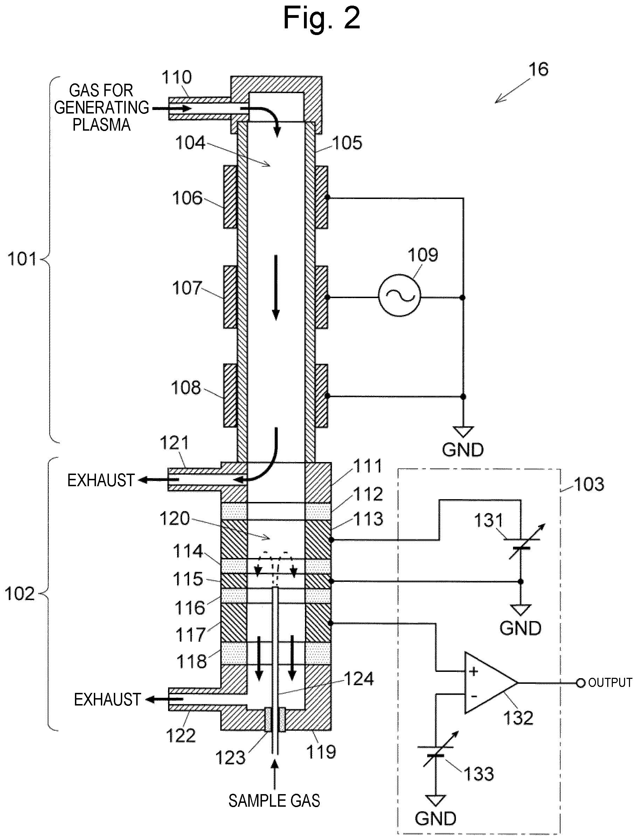

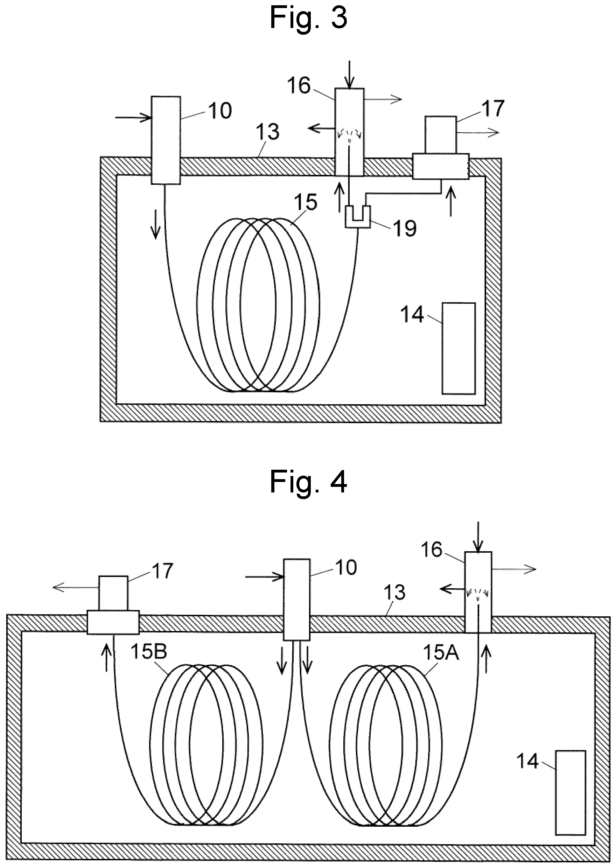

Fig. 1 is a schematic configuration diagram of a measuring device according to the present embodiment, and Fig. 2 is a schematic configuration diagram of a BID in Fig. 1. The description of each component in Figs. 1 and 2 (and Figs. 3 and 4 described later) is schematic, and needless to say, it does not necessarily correspond to the actual disposition and size.

As illustrated in Fig. 1, this measuring device includes a GC measurement unit 1, a data processing unit 2, and a control unit 3. The GC measurement unit 1 includes a sample introduction unit 10, a gas-tight syringe 11, a flow controller 12, a column oven 13, a heater 14, a column 15, a BID 16, an FID 17, and a connecting tube 18. As the column 15, a capillary column using a high purity carbon carrier as a filler, specifically, a Micropacked ST column manufactured by Shinwa Chemical Industries Ltd. can be used. As the connecting tube 18, for example, a metal column not filled with a filler can be used.

The data processing unit 2 includes, as functional blocks, a data collection unit 20, a chromatogram preparing unit 21, and a quantity calculation unit 22. The data processing unit 2 is connected to a display unit 23. The control unit 3 includes a control information storage unit 30. The control information storage unit 30 stores, as control information for controlling the GC measurement unit 1, a measuring method including various parameter values and the like for defining separation conditions. The measuring method includes information, for example, such as a carrier gas flow rate (flow velocity), a temperature profile of the column oven, and flow rates of various gases used for the BID 16 and the FID 17.

The measuring device can have a configuration in which the data processing unit 2 and the control unit 3 implement various functions by executing, on a personal computer (PC) as a hardware resource, dedicated control and processing software installed on that PC.

Next, a configuration of the BID 16 will be described with reference to Fig. 2.

The BID 16 roughly includes a discharge unit 101, a charge collection unit 102, and an ion electric current detection unit 103.

The discharge unit 101 includes: a dielectric cylindrical tube 105 whose inside is a first gas passage 104; three ring-shaped electrodes 106, 107, and 108 for generating plasma (hereinafter, the individual electrodes are referred to as upstream side ground electrode 106, high voltage electrode 107, and downstream side ground electrode 108) disposed on an outer wall surface of the dielectric cylindrical tube 105 at a predetermined distance away from each other in an axial direction of them; and an excitation high-voltage AC power supply 109. The dielectric cylindrical tube 105 is made of, for example, quartz. Hereinafter, for convenience of description, a vertical direction is defined with the upstream side and the downstream side in the gas flowing direction (direction indicated by a downward arrow in Fig. 2) in the dielectric cylindrical tube 105 as up and down. The high voltage electrode 107 is connected to an excitation high-voltage AC power supply 109, and both the upstream side ground electrode 106 and the downstream side ground electrode 108 are grounded. The excitation high-voltage AC power supply 109 generates a high-voltage AC voltage having, for example, a frequency of about 5 kHz to 30 kHz and a voltage of about 5 kV to 10 kV.

A gas supply pipe 110 is connected to an upper end of the dielectric cylindrical tube 105, and a gas for generating plasma also serving as a dilution gas is fed into the first gas passage 104 through the gas supply pipe 110. Since the wall surface of the dielectric cylindrical tube 105 exists between the electrodes 106 to 108 for generating plasma and the first gas passage 104, the wall surface itself functions as a dielectric coating layer coating the surfaces of the electrodes 106 to 108 for generating plasma, and enables dielectric barrier discharge described later to be performed.

In the charge collection unit 102, a connection member 111 connected to the lower end of the dielectric cylindrical tube 105, a first insulating member 112, a bias electrode 113, a second insulating member 114, an additional electrode 115, a third insulating member 116, a collection electrode 117, a fourth insulating member 118, and a pipeline end member 119 are disposed in this order from the top. Each of the first insulating member 112, the second insulating member 114, the third insulating member 116, and the fourth insulating member 118 is made of a high-resistance material such as ultra-high-purity alumina or sapphire. Each of these members has a cylindrical shape, and a second gas passage 120 continuous with the first gas passage 104 is formed inside these members.

A bypass exhaust pipe 121 that discharges part of the plasma-generation gas to the outside is connected to a peripheral surface of the connection member 111. In addition, a sample exhaust pipe 122 is connected to a lower end of the pipeline end member 119. A through hole is formed in a lower surface of the pipeline end member 119, and a sample introduction pipe 124 having a small diameter is inserted into the through hole via a seal portion 123. The lower end of the sample introduction pipe 124 is connected to the outlet end of the column 15 via a joint, which is not illustrated, or the like, and gas containing a sample component flowing out from the outlet of the column 15 (hereinafter referred to as "sample gas") is fed into the second gas passage 120 through the sample introduction pipe 124. The outlet end of the column 15 may be directly inserted into the through hole without providing the sample introduction pipe 124.

The bias electrode 113 is connected to a bias electrode DC power supply 131 included in the ion electric current detection unit 103, and the collection electrode 117 is connected to an electric current amplifier 132 also included in the ion electric current detection unit 103. The additional electrode 115 is grounded, and the additional electrode 115 absorbs a leakage electric current flowing from the bias electrode 113 to the collection electrode 117 through the insulator surface (that is, the inner peripheral surface of the second insulating member 114 and the inner peripheral surface of the third insulating member 116).

The ion electric current detection unit 103 is further provided with a collection electrode DC power supply 133 for applying a DC voltage to the collection electrode 117. A non-inverting input terminal of the electric current amplifier 132 is connected to the collection electrode 117, and an inverting input terminal of the electric current amplifier 132 is connected to the GND via the collection electrode DC power supply 133. The voltages from the bias electrode DC power supply 131 and the collection electrode DC power supply 133 are controlled by the control unit 3.

### [Measurement Operation of Measuring Device of One Embodiment]

An operation when CO₂, CH₄, and N₂O in the atmosphere are simultaneously measured by the measuring device will be described.

The control unit 3 controls each part of the GC measurement unit 1 on the basis of the control information stored in the control information storage unit 30. Specifically, the temperature in the column oven 13 is adjusted according to a predetermined profile by driving each of the heater 14 attached to the column oven 13 and a fan, which is not illustrated. The flow controller 12 adjusts helium as a carrier gas to a predetermined flow rate and feeds the helium to the sample introduction unit 10. The gas-tight syringe 11 shoots a predetermined amount of a measurement target gas (atmosphere) into the sample introduction unit 10 at a predetermined timing. The measurement target gas is pushed by the carrier gas and introduced into the column 15.

Although not illustrated in Fig. 1, a split passage is connected to the sample introduction unit 10, and part of the measurement target gas shot into the sample introduction unit 10 is introduced into the column 15, and the rest is discharged through the split passage. In addition, here, the measurement target gas is sent into the column 15 using the sample introduction unit 10 and the gas-tight syringe 11, but the measuring device may have a configuration in which a predetermined amount of measurement target gas is sent into the column 15 by another method such as a gas sampler.

While the measurement target gas passes through the column 15, various components in the gas are temporally separated and flow out from the outlet of the column 15. Therefore, the sample component in the sample gas exiting from the column 15 changes in accordance with a lapse of time with the sample shot time as a starting point. This sample gas exits from the outlet of the column 15 and is first introduced into the BID 16.

As indicated by a thick arrow in Fig. 2, in the BID 16, the gas for generating plasma is fed into the first gas passage 104 through the gas supply pipe 110 at a predetermined flow rate. The gas for generating plasma is a gas that is easily ionized, and for example, helium (or argon, nitrogen, neon, xenon, krypton, or the like, or a mixed gas of them) can be used. The gas for generating plasma flows downward in the first gas passage 104, part of the gas is discharged to the outside through the bypass exhaust pipe 121, and the rest of that flows downward in the second gas passage 120 as a dilution gas and is discharged through the sample exhaust pipe 122. On the other hand, the sample gas passes through the sample introduction pipe 124 and is discharged into the second gas passage 120 from a discharge outlet at a terminal of the sample introduction pipe 124. The sample gas is discharged in a direction opposite to the flow direction of the dilution gas, but the sample gas is immediately pushed back by the dilution gas, joins the dilution gas, and travels downward as indicated by broken line arrows in Fig. 2.

As described above, when the gas for generating plasma flows through the first gas passage 104, the excitation high-voltage AC power supply 109 applies a high-voltage AC voltage to the electrodes 106 to 108 for generating plasma. As a result, dielectric barrier discharge is generated mainly in the plasma generation region sandwiched between the ground electrodes 106 and 108 in the first gas passage 104, and the gas for generating plasma is widely ionized to generate plasma (atmospheric pressure non-equilibrium microplasma). The light emitted from the plasma passes through the first gas passage 104 and the second gas passage 120 to reach a portion where the sample gas exists, and ionizes the sample component in the sample gas. The ions (or electrons) generated in this manner move so as to approach the collection electrode 117 by an action of an electric field formed by the DC voltage applied to the bias electrode 113, and transfer charges in the collection electrode 117.

As a result, an ion electric current corresponding to the amount of generated ions (or electrons) derived from the sample component, that is, the amount of the sample component is input to the electric current amplifier 132, and the electric current amplifier 132 amplifies the ion electric current and outputs a detection signal. The detection signal that changes from moment to moment is sent to the data processing unit 2, converted into digital data at a predetermined time interval by an analog-to-digital converter included in the data collection unit 20, and stored. The BID 16 can detect almost all components other than He and Ne. Therefore, a detection signal is obtained corresponding to each of the components other than He and Ne contained in the sample gas.

The sample gas after having been subjected to the component detection in the BID 16 passes through the sample exhaust pipe 122, passes through the connecting tube 18, and is introduced into the FID 17, together with the dilution gas. In the BID 16, some of the sample components are lost by ionization, but as described above, what is ionized is part of each of the components. Therefore, the sample gas introduced into the FID 17 sufficiently contains the sample components separated by the column 15. In the FID 17, hydrogen flame is formed from hydrogen and air supplied from a hydrogen supply source and an air supply source, which are not illustrated, and the sample gas is introduced into this hydrogen flame to burn the sample components. Ions derived from the sample components generated by this combustion are collected on a collector electrode to obtain a detection signal. The detection signal, which changes from moment to moment, is also sent to the data processing unit 2, converted into digital data at a predetermined time interval by an analog-to-digital converter included in the data collection unit 20, and stored.

The connecting tube 18 that connects the sample exhaust pipe 122 of the BID 16 and a sample gas introduction part of the FID 17 is merely a tube unlike the column 15, and a sufficient flow rate of gas is supplied to the BID 16. Therefore, a moving speed of the sample component in the connecting tube 18 is sufficiently high, and the component hardly stays in the connecting tube 18. As a result, deterioration in separation characteristics (specifically, spread of a peak) due to passing through the connecting tube 18 is negligible. In addition, it can be considered that the detection signal by the BID 16 and the detection signal by the FID 17 correspond to substantially the same retention time.

In the data processing unit 2, the chromatogram preparing unit 21 creates chromatograms respectively corresponding to the BID 16 and the FID 17 on the basis of data stored in the data collection unit 20 while the measurement is being executed or after the measurement is completed. The quantity calculation unit 22 detects peaks corresponding to CO₂ and N₂O in the chromatogram corresponding to the BID 16, and calculates an area value of each of the peaks. In addition, the quantity calculation unit 22 detects a peak corresponding to CH₄ in the chromatogram corresponding to the FID 17, and also calculates an area value of the peak. When each peak is detected, the retention time corresponding to each component given as control information can be used. The quantity calculation unit 22 calculates the concentrations from the area values of the peaks corresponding to CO₂, N₂O, and CH₄ using a calibration curve created in advance, and outputs the results from the display unit 23.

In this manner, the measuring device of the present embodiment can present the measurement results of the concentrations of CO₂, N₂O, and CH₄ contained in the measurement target gas to the user.

### <Experimental Example>

An experimental example by the measuring device of the above embodiment will be described.

Measurement conditions in this experimental example are as follows.
· Device used: Nexis GC-2030 manufactured by SHIMADZU CORPORATION
· Column used: Micropacked ST
· Column temperature: 35 °C (2min) → (5 °C/min) → 60 °C → (40 °C/min) → 200 °C → (25 °C/min) → 250 °C → (15 °C/min) → 275 °C (3min) · Carrier gas column flow rate: 9 mL/min
· Supply inlet temperature: 100 °C
· Detector temperature: 280 °C
· Sample shot amount: 1 mL
· BID gas flow rate: 50 mL/min
· Connecting tube size: Inner diameter: 0.5 mm, length: about 1 m

As a specific connection method of the detector, one end of a metal column of the above size was connected to a discharge port (VENT2) of a BID on a back surface of the device, and the other end of the column was connected to an FID attached in a column oven. An adapter nipple GN-C (P/N: 221-32508), a washer, a nut GF (P/N: 201-30006), and a rubber column packing were used for connecting the discharge port and the metal column. A penetration length of the metal column into the discharge port was about 1 cm, and the metal column was attached to an adapter nipple using a graphite ferrule and a nut.

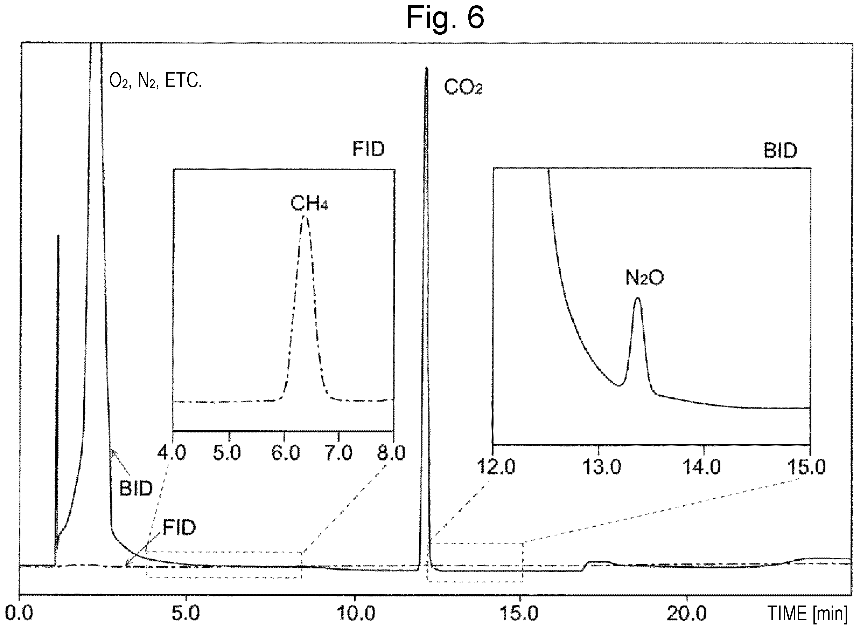

Fig. 6 is an actual measurement example of a chromatogram corresponding to each of the BID and the FID. The concentration of each component is the same as that in the actual measurement example illustrated in Fig. 5. As is clear from Fig. 6, not only the peaks corresponding to CO₂ and N₂O can be observed favorably, but also the peak corresponding to CH₄ overlapping to Kr in the result illustrated in Fig. 5 is sufficiently separated from other components and observed with high sensitivity. As a result, these three types of greenhouse gas components can be quantified with high accuracy.

### [Measuring Device of Another Embodiment]

Fig. 3 is a configuration diagram of a main part of a greenhouse gas measuring device of another embodiment corresponding to the method B described above. In this measuring device, a bifurcated adapter 19 is attached to the end of the column 15, a sample introduction pipe 124 of the BID 16 is connected to one branched gas outlet, and a tube connected to a sample gas introduction port of the FID 17 is connected to the other gas outlet. The sample gas containing the components separated in the column 15 is roughly divided into two and correspondingly supplied to the BID 16 and the FID 17. The BID 16 and the FID 17 perform the above-described detection operation in parallel, and each output a detection signal to the data processing unit 2. The bifurcated adapter 19 does not necessarily branch the gas into equal amounts, and may branch the gas at a predetermined ratio other than that.

Fig. 4 is a configuration diagram of a main part of the greenhouse gas measuring device of another embodiment corresponding to the method C described above. In this measuring device, one end each of two columns 15A and 15B is connected to the sample introduction unit 10, the other end of the one column 15A is connected to the BID 16, and the other end of the other column is connected to the FID 17. The two columns 15A and 15B may be the same. The measurement target gas introduced into the sample introduction unit 10 is roughly equally divided into two and sent into the columns 15A and 15B. The sample gas containing the sample component having been subjected to component separation in the column 15A is introduced into the BID 16, and the BID 16 performs the detection operation described above and outputs a detection signal to the data processing unit 2. The chromatogram created based on this detection signal is used for quantification of CO₂ and N₂O. The sample gas containing the sample component having been subjected to component separation in the column 15B is introduced into the FID 17, and the FID 17 performs the detection operation described above and outputs a detection signal to the data processing unit 2. The chromatogram created on the basis of this detection signal is used for quantification of CH₄.

The embodiments and the actual measurement examples described above are merely examples of the present invention, and it is a matter of course that modifications, corrections, additions, and the like appropriately made within the scope of the gist of the present invention are included in the claims of the present application. For example, the measurement conditions mentioned in the actual measurement examples described above are merely examples, and do not necessarily indicate the optimum conditions for quantifying each component described above, and can be changed as appropriate.

### [Various Modes]

A person skilled in the art can understand that the previously described illustrative embodiments are specific examples of the following modes of the present invention.

(Clause 1) One mode of a measuring method for greenhouse gases according to the present invention is a method for measuring three types of greenhouse gases, carbon dioxide, methane, and dinitrogen monoxide, contained in an atmosphere by using a gas chromatograph, the measuring method including:
a separation step of introducing the atmosphere which may contain the three types of greenhouse gases as components into a column of the gas chromatograph and separating various components in the atmosphere including the three types of greenhouse gases in a time direction;
a first detection step of detecting each of carbon dioxide and dinitrogen monoxide in a gas after having been subjected to a component separation in the separation step using a dielectric barrier discharge ionization detector;
a second detection step of detecting methane in the gas after having been subjected to the component separation in the separation step using a flame ionization detector; and
a quantitative determination step of preparing chromatograms respectively based on detection signals obtained in the first detection step and based on detection signals obtained in the second detection step, and quantifying carbon dioxide, dinitrogen monoxide, and methane respectively from peaks observed in the chromatograms.

(Clause 4) Another mode of a measuring device for greenhouse gases according to the present invention is a device configured to measure three types of greenhouse gases, carbon dioxide, methane, and dinitrogen monoxide, contained in an atmosphere, the measuring device including:
a column of a gas chromatograph configured to separate various components in the atmosphere which may contain the three types of greenhouse gases as components in a time direction;
a dielectric barrier discharge ionization detector configured to detect each of carbon dioxide and dinitrogen monoxide in a gas after having been subjected to a component separation in the column; and
a flame ionization detector configured to detect methane in the gas after having been subjected to a detection by the dielectric barrier discharge ionization detector; and
a quantitative determination processor configured to create chromatograms based on detection signals obtained by the dielectric barrier discharge ionization detector and the flame ionization detector, to respectively quantify carbon dioxide, dinitrogen monoxide, and methane from peaks observed in the chromatograms.

With the measuring method according to clause 1 and the measuring device according to clause 4, it is possible to measure carbon dioxide, methane, and dinitrogen monoxide, which are main greenhouse gases in the atmosphere, with high sensitivity while using a device having a simple and inexpensive configuration without complicated passage switching or the like. Accordingly, the measurement of the greenhouse gases can be easily performed at low cost.

(Clause 2) In the measuring method for greenhouse gases according to clause 1, in the first detection step, the gas after having been subjected to the component separation in the separation step may be introduced into the dielectric barrier discharge ionization detector (BID) to detect each of carbon dioxide and dinitrogen monoxide, and in the second detection step, the gas after having been subjected to the detection in the first detection step may be introduced into the flame ionization detector (FID) to detect methane.

As described above, the BID is a substantially non-destructive detector, and by connecting the BID and the FID in series, it is possible to sufficiently exhibit the detection performance in each detector without dividing the sample gas, that is, without dividing the amounts of the sample. As a result, with the measuring method according to clause 2, three main types of greenhouse gases can be detected with high sensitivity, and high quantitativity can be secured.

(Clause 3) In the measuring method for greenhouse gases according to clause 2, the gas after having been subjected to the detection in the first detection step introduced into the flame ionization detector may include a component in a sample gas introduced into the dielectric barrier discharge ionization detector from an outlet of the column in part of a gas for generating plasma introduced into the dielectric barrier discharge ionization detector for generating plasma.

In the BID, plasma is generated from a gas for generating plasma such as helium, but after the plasma is generated, part of the gas is discharged, the sample gas is mixed into the remaining gas to execute detection of the sample component, and the gas after the detection is used for detection of the sample component in the second detection step. Therefore, the concentration of the sample component in the gas subjected to the detection of the sample component in the second detection step does not become lower than necessary, and even when the concentration of CH₄ in the atmosphere to be measured is low, CH₄ can be sufficiently detected in the flame ionization detector. As a result, CH₄ can be quantified with high accuracy.

### REFERENCE SIGNS LIST

- 1: Gas Chromatograph (GC) Measurement Unit
- 10: Sample Introduction Unit
- 11: Gas-Tight Syringe
- 12: Flow Controller
- 13: Column Oven
- 14: Heater
- 15, 15A, 15B: Column
- 16: Dielectric Barrier Discharge Ionization Detector (BID)
- 17: Flame Ionization Detector (FID)
- 18: Connecting Tube
- 19: Bifurcated Adapter
- 2: Data Processing Unit
- 20: Data Collection Unit
- 21: Chromatogram Preparing Unit
- 22: Quantity Calculation Unit
- 23: Display Unit
- 3: Control Unit
- 30: Control Information Storage Unit
- 101: Discharge Unit
- 102: Charge Collection Unit
- 103: Ion Electric Current Detection Unit
- 104: First Gas Passage
- 105: Dielectric Cylindrical Tube
- 106: Upstream Side Ground Electrode
- 107: High Voltage Electrode
- 108: Downstream Side Ground Electrode
- 109: Excitation High-Voltage AC Power Supply
- 110: Gas Supply Pipe
- 111: Connection Member
- 112: First Insulating Member
- 113: Bias Electrode
- 114: Second Insulating Member
- 115: Additional Electrode
- 116: Third Insulating Member
- 117: Collection Electrode
- 118: Fourth Insulating Member
- 119: Pipeline End Member
- 120: Second Gas Passage
- 121: Bypass Exhaust Pipe
- 122: Sample Exhaust Pipe
- 123: Seal Member
- 124: Sample Introduction Pipe
- 131: Bias Electrode DC Power Supply
- 132: Electric Current Amplifier
- 133: Collection Electrode DC Power Supply

## Claims

1. A measuring method for greenhouse gases, the measuring method being a method for measuring three types of greenhouse gases, carbon dioxide, methane, and dinitrogen monoxide, contained in an atmosphere by using a gas chromatograph, the measuring method comprising:
a separation step of introducing an atmosphere which may contain the three types of greenhouse gases as components into a column of the gas chromatograph and separating various components in the atmosphere including the three types of greenhouse gases in a time direction;
a first detection step of detecting each of carbon dioxide and dinitrogen monoxide in a gas after having been subjected to a component separation in the separation step using a dielectric barrier discharge ionization detector;
a second detection step of detecting methane in the gas after having been subjected to the component separation in the separation step using a flame ionization detector; and
a quantitative determination step of preparing chromatograms respectively based on detection signals obtained in the first detection step and based on detection signals obtained in the second detection step, and quantifying carbon dioxide, dinitrogen monoxide, and methane respectively from peaks observed in the chromatograms.

2. The measuring method for greenhouse gases according to claim 1, wherein in the first detection step, the gas after having been subjected to the component separation in the separation step is introduced into the dielectric barrier discharge ionization detector to detect each of carbon dioxide and dinitrogen monoxide, and in the second detection step, the gas after having been subjected to the detection in the first detection step is introduced into the flame ionization detector to detect methane.

3. The measuring method for greenhouse gases according to claim 2, wherein the gas after having been subjected to the detection in the first detection step introduced into the flame ionization detector includes a component in a sample gas introduced into the dielectric barrier discharge ionization detector from an outlet of the column in part of a gas for generating plasma introduced into the dielectric barrier discharge ionization detector for generating plasma.

4. A measuring device for greenhouse gases, the measuring device being configured to measure three types of greenhouse gases, carbon dioxide, methane, and dinitrogen monoxide, contained in an atmosphere, the measuring device comprising:
a column of a gas chromatograph configured to separate various components in the atmosphere which may contain the three types of greenhouse gases as components in a time direction;
a dielectric barrier discharge ionization detector configured to detect each of carbon dioxide and dinitrogen monoxide in a gas after having been subjected to a component separation in the column; and
a flame ionization detector configured to detect methane in the gas after having been subjected to a detection by the dielectric barrier discharge ionization detector; and
a quantitative determination processor configured to create chromatograms based on detection signals obtained by the dielectric barrier discharge ionization detector and the flame ionization detector, to respectively quantify carbon dioxide, dinitrogen monoxide, and methane from peaks observed in the chromatograms.
